# FASCICULE DE BREVET EUROPEEN

(11) **EP 3 392 079 B1**
(45) Date de publication et mention de la délivrance du brevet: **29.05.2024**
(21) Numéro de dépôt: 18168113.1
(22) Date de dépôt: 19.04.2018
(51) Int. Cl.: B60N 2/02, B60N 2/42, B60N 2/75

(54) **SIÈGE COMPORTANT UN MODULE D'ACCOUDOIR PIVOTANT**
SITZ, DER EIN SCHWENKBARES ARMLEHNENMODUL UMFASST
SEAT COMPRISING A PIVOTABLE ARMREST MODULE

(30) Priorité: 20.04.2017 FR 1753454
(43) Date de publication de la demande: 24.10.2018
(73) Titulaire: FAURECIA Sièges d'Automobile, 92000 Nanterre (FR)
(72) Inventeur: CAZES, Christophe, 78000 Versailles (FR); DUBOULET, Claude, 91580 Etrechy (FR); ROBERT, Jacques, 91460 Marcoussis (FR)
(74) Mandataire: Plasseraud IP

(56) Documents cités:
- EP-A1- 3 069 996
- EP-A2- 2 033 851
- DE-A1- 3 128 653
- FR-A1- 2 841 510
- JP-A- 2016 210 272
- US-A1- 2007 200 414
- US-A1- 2017 101 188

## Description

La présente invention concerne un siège de véhicule comportant un dossier, une assise qui s'étend transversalement selon une direction transversale depuis un premier bord latéral jusqu'à un second bord latéral, et un module d'accoudoir.

Dans la description qui suit, les termes « avant » et « arrière » sont définis par rapport à l'assise du siège, le bord arrière de l'assise étant le bord qui est prolongé verticalement par le dossier du siège, et le bord avant étant le bord opposé au bord arrière.

Dans la description qui suit, les termes « haut »/« supérieur » et « bas »/« inférieur » sont définis par rapport à l'assise du siège dans sa position habituelle horizontale.

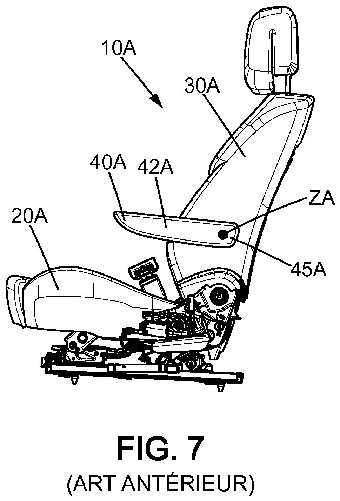

On connaît des sièges de véhicule, en particulier des sièges de véhicule automobile, qui comportent un module d'accoudoir. Un exemple d'un tel module 40A est représenté en figure 7, avec un siège 10A comportant une assise 20A sensiblement horizontale et un dossier 30A. Ce module 40A comporte un accoudoir 42A qui s'étend selon une direction principale selon un axe longitudinal XA. Le module 40A est fixé sur le dossier 30A et est articulé avec ce dernier par une liaison pivot 45A autour d'un axe pivot ZA (perpendiculaire au plan de la figure 7). Ainsi l'accoudoir 42A est apte à pivoter dans un plan vertical, entre une première position en alignement avec le dossier 30A, où l'axe longitudinal XA est aligné avec le dossier 30A, et une deuxième position où l'axe longitudinal XA est perpendiculaire au dossier 30A et sensiblement horizontal.

Dans la première position, un occupant peut s'asseoir sur l'assise 20A en s'en approchant selon la direction de l'axe pivot ZA.

Dans la deuxième position (représentée sur la figure 7), l'accoudoir 42A est apte à recevoir un bras d'un occupant assis sur l'assise 20A du siège 10A.

Un tel siège présente néanmoins des inconvénients.

Le siège étant situé dans l'habitacle du véhicule, par exemple un véhicule automobile, l'accès au siège par une personne est compliqué par les éléments (par exemple le cadre de la portière, le tableau de bord) entourant le siège, même lorsque l'accoudoir est escamoté dans la première position.

La présente invention vise à remédier à ces inconvénients.

EP 3069996 A1 décrit un ensemble accoudoir comprenant une structure de base et une structure supérieure ayant une surface supérieure formant un accoudoir. La structure supérieure est mobile par rapport à la structure de base entre une position supérieure et une position inférieure sous le contrôle d'un actionneur verrouillable qui peut fonctionner pour verrouiller la structure supérieure par rapport à la structure de base dans l'une quelconque d'une pluralité de positions adoptables.

Le document US 2007/200414 A1 forme la base du préambule de la revendication 1 et décrit des sièges destinés à être utilisés dans des véhicules de tourisme et pouvant comprendre des tables à plateaux, des porte-gobelets et des accoudoirs. Les récipients à boissons peuvent comprendre des supports tandis que les tables à plateaux peuvent comprendre des sections articulées pour supporter des objets. Un éclairage faisant partie d'un mécanisme d'inclinaison pour le moniteur vidéo d'un équipement de divertissement en vol peut éclairer la table à plateau. Les accoudoirs peuvent comprendre plusieurs composants et soit pivoter autour de plusieurs points, soit se déplacer et pivoter à la fois, leur permettant de se déplacer vers le bas à partir de positions d'utilisation nominales.

L'invention vise à proposer un siège de véhicule qui soit plus facilement accessible pour un occupant, tout en offrant un accoudoir pour son bras.

Ce but est atteint grâce au fait que le module d'accoudoir comporte un corps et un accoudoir supporté par ce corps, et qu'il est apte à se déplacer par rapport à l'assise ce déplacement s'effectuant entre une position d'accueil où l'accoudoir prolonge latéralement l'assise ou se situe plus bas que l'assise de façon à être apte à recevoir un occupant, et une position de repos où l'accoudoir se situe verticalement plus haut que l'assise de façon à être apte à recevoir un bras d'un occupant assis sur l'assise, le module d'accoudoir présentant une forme sensiblement plane dans un plan vertical, avec une épaisseur qui s'étend dans la direction transversale T.

Grâce à ces dispositions, l'occupant peut, dans la position d'accueil du module d'accoudoir, accéder plus aisément au siège grâce à l'accoudoir, tout en bénéficiant d'un soutien pour son bras une fois qu'il est assis dans le siège lorsque le module d'accoudoir est en position de repos.

Selon l'invention, l'accoudoir est apte à coulisser verticalement par rapport au corps pour être ajustable en hauteur entre une position basse et une position haute lorsque le module d'accoudoir est en position de repos.

Ainsi, quelle que soit la morphologie de l'occupant du siège, son avant-bras reposant sur l'accoudoir sera à une hauteur optimale par rapport à son buste, et l'occupant sera assis dans une position plus confortable.

Selon l'invention, le déplacement du module d'accoudoir par rapport à l'assise comprend une rotation avec une liaison pivot autour d'un axe pivot Z dirigé transversalement par rapport à l'assise.

Ainsi, le mouvement du module entre la position d'accueil et la position de repos est simplifié.

Avantageusement, le module d'accoudoir est articulé par la liaison pivot à l'assise.

Ainsi, l'articulation entre le module d'accoudoir et le siège est plus simple, puisque les positions d'accueil et de repos sont définies par rapport à l'assise.

Avantageusement, le passage du module d'accoudoir de la position d'accueil vers la position de repos s'effectue avec une rotation de la partie avant du module d'accoudoir vers l'arrière de l'assise pour rapprocher cette partie avant du dossier.

Ainsi, l'arrière du module d'accoudoir pivote vers l'avant et dégage la zone d'articulation du dossier avec l'assise en position de repos. Ceci permet de libérer un espace de passage pour la ceinture de sécurité du siège.

Avantageusement, le passage du module d'accoudoir de la position d'accueil vers la position de repos s'effectue avec une rotation de la partie arrière du module d'accoudoir vers l'avant de l'assise pour éloigner cette partie arrière du dossier.

Ainsi, l'avant du module d'accoudoir pivote vers l'arrière et dégage la zone latérale de l'avant de l'assise, ce qui permet un passage plus facile des jambes de l'occupant sur le siège lorsque l'occupant s'y assied.

Avantageusement, l'accoudoir a une forme de L de telle sorte qu'il comprend une branche qui constitue la partie supérieure du module d'accoudoir en position d'accueil.

Ainsi, l'accoudoir recouvre la partie supérieure du corps du module d'accoudoir à la fois en position d'accueil et en position de repos.

Avantageusement, le module d'accoudoir comporte une partie qui constitue une protection en cas d'impact latéral.

Ainsi, le bassin de l'utilisateur, qui est situé derrière le module d'accoudoir selon une direction transversale à l'assise, est mieux protégé en cas de choc latéral/transversal sur le véhicule.

Avantageusement, le module d'accoudoir présente une forme allongée selon un axe longitudinal X perpendiculaire à l'axe pivot Z, l'axe longitudinal X s'étendant sensiblement horizontalement dans la position d'accueil, et s'étendant sensiblement verticalement dans la position de repos.

Ainsi, le module d'accoudoir présente une forme dans un plan perpendiculaire à l'axe pivot Z qui se rapproche de celle de l'assise.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective d'un siège selon l'invention, avec le module d'accoudoir en position d'accueil ;
- la figure 2 est une vue de côté du siège de la figure 1, avec le module d'accoudoir en position de repos ;
- la figure 3 est une vue de côté du siège de la figure 1, avec le module d'accoudoir en position de repos et l'accoudoir en position haute par rapport au corps d'accoudoir ;
- la figure 4 est une vue de côté d'un siège selon un autre mode de réalisation de l'invention, avec le module d'accoudoir en position d'accueil ;
- la figure 5 est une vue de côté du siège de la figure 4, avec le module d'accoudoir en position de repos ;
- la figure 6 est une vue de côté du siège de la figure 4, avec le module d'accoudoir en position de repos et l'accoudoir en position haute par rapport au corps d'accoudoir ;
- la figure 7, déjà décrite, représente un siège selon l'art antérieur.

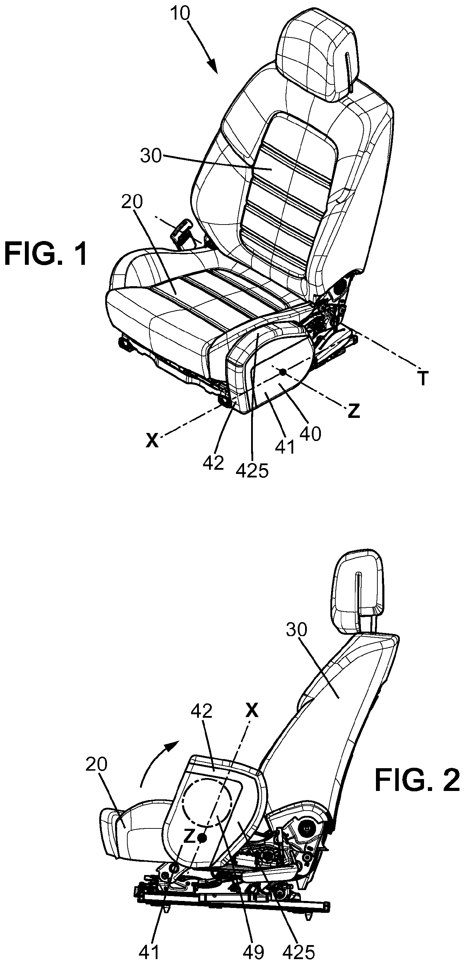

La figure 1 représente un siège 10 de véhicule selon l'invention, par exemple de véhicule automobile. Le siège 10 comporte une assise 20 (sur laquelle un occupant est destiné à s'asseoir), avec un bord avant, et un bord arrière situé à l'opposé du bord avant, un dossier 30 qui est relié au bord arrière et qui prolonge cette assise 20 dans un plan sensiblement perpendiculaire au plan de l'assise 20.

Dans la description qui suit, le siège 10 est dans sa position usuelle, avec l'assise 20 s'étendant sensiblement dans un plan horizontal, le dossier 30 s'étendant dans un plan sensiblement vertical.

L'assise 20 s'étend transversalement selon une direction transversale T (représentée sur la figure 1) depuis un premier bord latéral jusqu'à un second bord latéral.

Par exemple le dossier 30 est articulé sur le bord arrière de l'assise 20, de telle sorte que le dossier 30 est apte à pivoter autour d'un axe s'étendant dans la direction transversale, en basculant vers l'avant ou vers l'arrière par rapport à l'assise 20 autour d'un plan perpendiculaire au plan de l'assise 20.

Le siège 10 comporte en outre un module d'accoudoir 40.

Par exemple, le module 40 est situé sur le côté gauche du siège 10.

Le module d'accoudoir 40 est relié au reste du siège 10 et est situé contre le premier bord latéral de l'assise 20. Le module 40 présente une forme sensiblement plane, dans un plan vertical, avec une épaisseur qui s'étend dans la direction transversale T. Par forme sensiblement plane, on entend que deux dimensions du module 40 sont chacune supérieures à trois fois la troisième dimension (épaisseur) de ce module 40, par exemple supérieures à cinq fois la troisième dimension, par exemple supérieures à dix fois la troisième dimension.

Le module d'accoudoir 40 comporte un corps 41 et un accoudoir 42 supporté par ce corps 41.

Le module 40 se déplace par rapport à l'assise 20 entre une position d'accueil et une position de repos.

Par exemple, ce mouvement de déplacement comprend une rotation de telle sorte que le module 40 est apte à pivoter par rapport à l'assise 20 par une liaison pivot 45 autour d'un axe pivot Z dirigé transversalement par rapport à l'assise 20.

Ce mouvement est constitué exclusivement de ce pivotement, ce qui présente l'avantage de la simplicité.

Alternativement, ce mouvement comprend en outre un autre mouvement, par exemple une translation.

Avantageusement, le module 40, en position d'accueil, ne dépasse pas vers l'avant de l'extrémité avant de l'assise 20, c'est-à-dire que l'extrémité l'avant de l'assise 20 se situe plus en avant que l'extrémité avant du module 40.

Grâce à cette disposition, l'occupant peut, dans la position d'accueil du module d'accoudoir 40, accéder aisément au siège 10 puisque le module 40 ne se situe pas sur le trajet des jambes de cet occupant lorsqu'il s'assied sur le siège 10.

Cet accès au siège 10 par un occupant est ainsi facilité, que le module d'accoudoir présente une forme sensiblement plane dans un plan vertical, ou non.

La disposition ci-dessus constitue un second moyen qui contribue à résoudre le problème de l'accessibilité au siège 10 par un occupant, le fait que le module d'accoudoir présente une forme sensiblement plane dans un plan vertical avec une épaisseur qui s'étend dans la direction transversale T constituant un premier moyen qui contribue à résoudre ce problème.

On décrit ci-dessous le cas où le mouvement est constitué exclusivement par un pivotement. Cependant, la description ci-dessous s'applique également au cas général.

La position d'accueil est représentée sur la figure 1. Dans cette position le module d'accoudoir 40 prolonge latéralement l'assise 20. La surface supérieure du module d'accoudoir 40 se situe alors dans le prolongement de la surface supérieure de l'assise 20 selon la direction transversale T, et contribue donc à élargir la surface de l'assise 20 dans cette direction transversale. La surface supérieure du module 40 peut alternativement se situer plus bas (verticalement) que la surface supérieure de l'assise 20. Ainsi, un occupant qui s'introduit habituellement dans le véhicule selon la direction transversale T est apte à prendre appui sur le module d'accoudoir 40 dans son mouvement pour s'asseoir in fine sur l'assise 20. L'installation de l'occupant sur le siège 10 est ainsi facilité.

Une fois assis sur l'assise 20, l'occupant peut relever le module 40 en le faisant pivoter autour de l'axe pivot Z dans sa position de repos, comme représenté en figure 2 (l'axe pivot Z est perpendiculaire au plan de la figure 2).

Comme représenté sur les figures 1 à 6, le module d'accoudoir 40 est articulé par la liaison pivot 45 à l'assise 20 par un mécanisme d'articulation qui relie le module 40 à l'assise 20.

Ainsi, l'articulation entre le module d'accoudoir 40 et le siège 10 est plus simple, étant donné que les positions d'accueil et de repos sont définies par rapport à l'assise 20.

Alternativement, le module d'accoudoir 40 est articulé par une liaison pivot 45 au dossier 30.

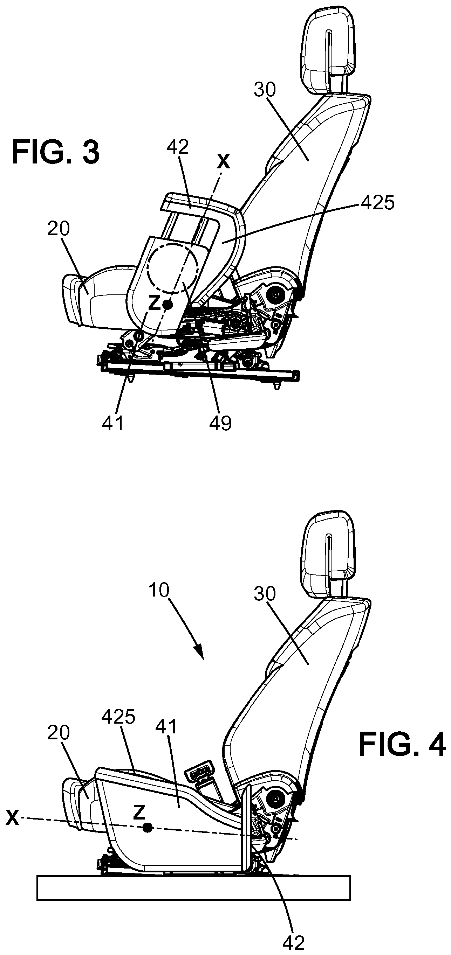

Dans sa position de repos (représenté en figures 2 et 3), l'accoudoir 42 se situe verticalement plus haut que le bord latéral de l'assise 20 de façon à être apte à recevoir un bras d'un occupant assis sur l'assise 20.

Dans le mode de réalisation représenté sur les figures 1 à 3, le passage du module d'accoudoir 40 de la position d'accueil vers la position de repos s'effectue avec une rotation de la partie avant du module 40 vers l'arrière de l'assise 20 et vers le haut pour rapprocher cette partie avant du dossier 30.

Ce mouvement de rotation s'effectue selon la flèche représentée sur la figure 2, dans le sens horaire, avec l'assise 20 se situant à l'arrière-plan du module 40.

En option, comme représenté sur les figures 1 à 3, l'axe pivot Z de la liaison pivot 45 est situé vers l'arrière (dans la partie arrière en position d'accueil) du module d'accoudoir 40.

Ainsi, avantageusement, l'arrière du module d'accoudoir 40 (en arrière de l'axe pivot Z en position d'accueil) pivote vers l'avant et dégage la zone d'articulation du dossier 30 avec l'assise 20 en position de repos. Ceci permet de libérer un espace de passage pour la ceinture de sécurité du siège 10.

Avantageusement, comme représenté sur les figures 1 à 3, l'accoudoir 42 a une forme de L, de telle sorte qu'il comprend une branche 425 qui constitue la partie supérieure du module 40 dans la position d'accueil et qui recouvre le corps 41 dans cette position. Dans cette position d'accueil (représentée en figure 1), l'accoudoir 42 prolonge latéralement l'assise 20. La surface supérieure de l'accoudoir 42 (en l'espèce de la branche 425) se situe alors dans le prolongement de la surface supérieure de l'assise 20 selon la direction transversale T, et contribue donc à élargir la surface de l'assise 20 dans cette direction transversale. La surface supérieure de l'accoudoir 42 peut également se situer en dessous de la surface supérieure de l'assise 20, par exemple légèrement en dessous, par exemple d'environ 10 cm.

La surface supérieure de l'accoudoir 42 est bombée, comme représenté sur les figures. Alternativement, la surface supérieure de l'accoudoir 42 est en pente (inclinée), ou horizontale. L'accoudoir 42 recouvre ainsi le corps 41 à la fois en position d'accueil et en position de repos. De plus, l'accoudoir 42 étant en une seule partie, la fabrication de l'accoudoir 42 et son assemblage avec le corps 41 est facilitée.

Alternativement, la branche 425 de l'accoudoir 42 est séparée et dissociée du reste de l'accoudoir 42. L'accoudoir 42 est donc en deux parties.

Dans le cas où le module 40 ne comprend pas de branche 425 qui constitue la partie supérieure du module 40 dans la position d'accueil, c'est la surface supérieure du module 40 qui peut être bombée, être en pente (inclinée), ou être horizontale.

Ces caractéristiques de la partie supérieure du module 40 ou de la partie supérieure de l'accoudoir 42 peuvent s'appliquer à tous les modes de réalisation de l'invention.

Avantageusement, comme représentée en figures 1 à 3, l'accoudoir 42 est apte à coulisser verticalement par rapport au corps 41 pour être ajustable en hauteur entre une position basse et une position haute lorsque le module d'accoudoir 40 est en position de repos.

Ainsi, quelle que soit la morphologie de l'occupant du siège 10, son avant-bras reposant sur l'accoudoir 42 sera à une hauteur optimale par rapport à son buste, et l'occupant sera assis dans une position plus confortable.

L'accoudoir 42 est représenté en position basse en figure 2, et en position haute en figure 3. L'accoudoir 42 se translate verticalement par rapport au corps 41 entre ces deux positions. En position basse l'accoudoir 42 repose sur le corps 41. En position haute, l'accoudoir 42 est apte à être bloqué ou débloqué par un mécanisme de blocage (tel qu'un encliquetage), non représenté, ce qui permet de soutenir le poids d'un bras s'appuyant ou reposant sur l'accoudoir 42.

L'accoudoir 42 est guidé dans son mouvement de translation par deux tiges qui coulissent dans des logements du corps 41. Alternativement ce guidage peut s'effectuer par une tige, ou plus de deux tiges.

Lorsque l'accoudoir 42 a une forme de L, la branche 425 coulisse le long du corps 41 dans le passage de l'accoudoir 42 entre position haute et position basse, ce qui contribue au guidage de l'accoudoir 42.

Avantageusement, l'accoudoir 42 peut être bloqué/débloqué en hauteur dans une ou plusieurs positions intermédiaires entre la position haute et la position basse.

Les figures 4 à 6 représentent un autre mode de réalisation de l'invention.

Dans ce mode de réalisation, le passage du module d'accoudoir 40 de la position d'accueil vers la position de repos s'effectue avec une rotation de la partie arrière du module 40 vers l'avant de l'assise 20 et vers le haut pour éloigner cette partie arrière du dossier 30.

En option, comme représenté sur les figures 4 à 6, l'axe pivot Z de la liaison pivot 45 est situé vers l'avant (dans la partie avant en position d'accueil) du module d'accoudoir 40.

Ainsi, l'avant du module d'accoudoir 40 (en avant de l'axe pivot Z en position d'accueil) est court et laisse libre la zone latérale de l'avant de l'assise 20, ce qui permet un passage plus facile des jambes de l'occupant sur le siège 10 lorsque l'occupant s'y assied dans un mouvement latéral.

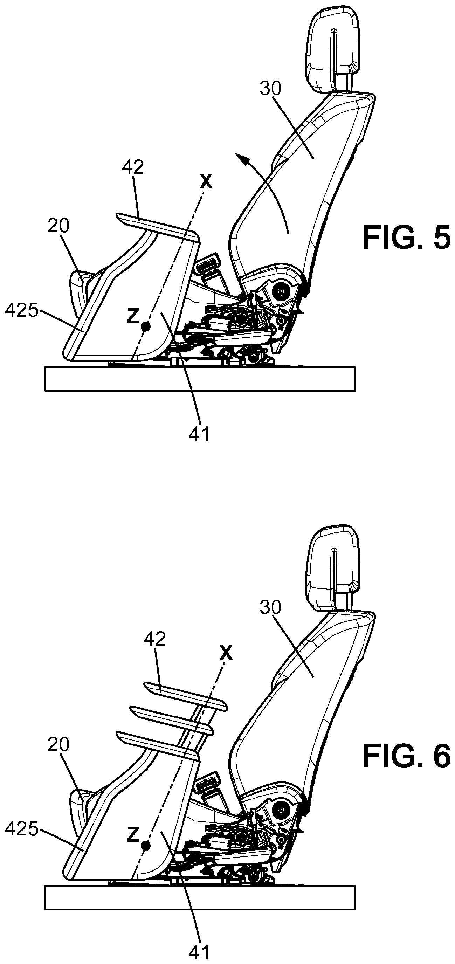

Le module 40 est représenté en figure 4 en position d'accueil, et est représenté en figure 5 en position de repos.

L'axe pivot Z est perpendiculaire au plan de la figure.

Le mouvement de rotation du module 40 s'effectue selon la flèche représentée sur la figure 5, dans le sens antihoraire, avec l'assise 20 se situant à l'arrière-plan du module 40.

Comme représenté sur les figures 4 à 6, la branche 425 de l'accoudoir 42, qui constitue la partie supérieure du module 40 en position d'accueil, est dissociée du reste de l'accoudoir 42.

Ainsi, comme représenté en figure 5 où le module 40 est en position de repos, la branche 425 reste fixe tandis que le reste de l'accoudoir 42 coulisse en position haute. Sur la figure 5 une position intermédiaire entre la position basse et la position haute est en outre représentée.

Alternativement, l'accoudoir a une forme de L de telle sorte que la branche 425 forme un seul bloc avec le reste de l'accoudoir 42.

Avantageusement, le module d'accoudoir 40 comporte une partie qui constitue une protection en cas d'impact latéral.

Par exemple, cette partie est un renfort rigide 49.

Le renfort rigide 49 est intégré au corps 41. Il est représenté en pointillé sur les figures 2 et 3.

Par « rigide », on entend un matériau qui est moins déformable, sous sollicitation identique, que les matériaux formant le reste du corps 41. En cas de choc latéral/transversal sur le véhicule, le renfort 49 agit comme un piston qui se déplace en bloc et pousse le bassin de l'occupant, en éloignant ce dernier de la zone d'impact.

Ainsi, le bassin de l'utilisateur, qui est situé derrière le module d'accoudoir selon une direction transversale à l'assise, est mieux protégé.

Avantageusement, comme représenté sur les figures 1 à 6, le module d'accoudoir 40 présente une forme allongée selon un axe longitudinal X perpendiculaire à l'axe pivot Z, l'axe longitudinal X s'étendant sensiblement horizontalement dans la position d'accueil, et s'étendant sensiblement verticalement dans la position de repos.

Ainsi, le module d'accoudoir 40 présente une forme dans un plan perpendiculaire à l'axe pivot Z qui se rapproche de celle de l'assise 40.

Dans la description ci-dessus, le siège 10 comporte un seul module d'accoudoir 40. Le siège 10 peut également comporter deux modules 40, un des modules 40 étant situé sur un bord latéral de l'assise 20, le second des modules 40 étant situé sur l'autre bord latéral de l'assise 20.

## Revendications

1. Siège de véhicule (10) comportant un dossier (30), une assise (20) qui s'étend transversalement selon une direction transversale depuis un premier bord latéral jusqu'à un second bord latéral, et un module d'accoudoir (40), ledit module (40) comportant un corps (41) et un accoudoir (42) supporté par ledit corps (41), et étant apte à se déplacer par rapport à ladite assise (20), ledit déplacement s'effectuant entre une position d'accueil où ledit accoudoir (42) prolonge latéralement ladite assise (20) ou se situe plus bas que ladite assise (20) de façon à être apte à recevoir un occupant, et une position de repos où ledit accoudoir (42) se situe plus haut que ladite assise (20) de façon à être apte à recevoir un bras d'un occupant assis sur ladite assise (20), le module d'accoudoir présentant une forme sensiblement plane dans un plan vertical, avec une épaisseur qui s'étend dans ladite direction transversale, ledit déplacement du module d'accoudoir (40) par rapport à ladite assise (20) comprenant une rotation avec une liaison pivot (45) autour d'un axe pivot Z dirigé transversalement par rapport à ladite assise (20), **caractérisé en ce que** ledit accoudoir (42) est apte à coulisser verticalement par rapport audit corps (41) pour être ajustable en hauteur entre une position basse et une position haute lorsque ledit module d'accoudoir (40) est en position de repos.

2. Siège (10) selon la revendication 1 **caractérisé en ce que** ledit module d'accoudoir (40) est articulé par ladite liaison pivot (45) à ladite assise (20).

3. Siège (10) selon la revendication 1 ou 2 **caractérisé en ce que** le passage dudit module d'accoudoir (40) de la position d'accueil vers la position de repos s'effectue avec une rotation de la partie avant dudit module d'accoudoir (40) vers l'arrière de l'assise (20) pour rapprocher ladite partie avant dudit dossier (30).

4. Siège (10) selon la revendication 1 ou 2 **caractérisé en ce que** le passage dudit module d'accoudoir (40) de la position d'accueil vers la position de repos s'effectue avec une rotation de l'arrière dudit module d'accoudoir (40) vers l'avant de l'assise (20) pour éloigner ladite partie arrière dudit dossier (30).

5. Siège (10) selon l'une quelconque des revendications précédentes **caractérisé en ce que** ledit accoudoir (42) a une forme de L de telle sorte qu'il comprend une branche (425) qui constitue la partie supérieure dudit module d'accoudoir (40) en position d'accueil.

6. Siège (10) selon l'une quelconque des revendications précédentes **caractérisé en ce que** ledit module d'accoudoir (40) comporte une partie qui constitue une protection en cas d'impact latéral.

7. Siège (10) selon l'une quelconque des revendications précédentes **caractérisé en ce que** ledit module d'accoudoir (40) présente une forme allongée selon un axe longitudinal X, ledit axe longitudinal X s'étendant sensiblement horizontalement dans ladite position d'accueil, et s'étendant sensiblement verticalement dans ladite position de repos.

## Patentansprüche

1. Fahrzeugsitz (10), umfassend eine Rückenlehne (30), eine Sitzfläche (20), die sich quer in einer Querrichtung von einem ersten Seitenrand zu einem zweiten Seitenrand erstreckt, und ein Armlehnenmodul (40), wobei das Modul (40) einen Körper (41) und eine Armlehne (42) umfasst, die an dem Körper (41) getragen ist, und in der Lage ist, sich in Bezug auf die Sitzfläche (20) zu bewegen, wobei die Bewegung zwischen einer Aufnahmeposition, in der die Armlehne (42) die Sitzfläche (20) seitlich verlängert oder sich tiefer als die Sitzfläche (20) befindet, so dass sie geeignet ist, einen Insassen aufzunehmen, und einer Ruheposition erfolgt, in der sich die Armlehne (42) höher als die Sitzfläche (20) befindet, so dass sie geeignet ist, einen Arm eines Insassen aufzunehmen, der auf der Sitzfläche (20) sitzt, wobei das Armlehnenmodul eine Form aufweist, die in einer vertikalen Ebene im Wesentlichen eben ist, mit einer Dicke, die sich in der Querrichtung erstreckt, wobei die Bewegung des Armlehnenmoduls (40) relativ zu der Sitzfläche (20) eine Drehung mit einer Schwenkverbindung (45) um eine Schwenkachse Z umfasst, die quer zu der Sitzfläche (20) ausgerichtet ist, **dadurch gekennzeichnet, dass** die Armlehne (42) dazu geeignet ist, sich in Bezug auf den Körper (41) vertikal zu verschieben, um zwischen einer unteren Position und einer oberen Position höhenverstellbar zu sein, wenn sich das Armlehnenmodul (40) in der Ruheposition befindet.

2. Sitz (10) nach Anspruch 1, **dadurch gekennzeichnet, dass** das Armlehnenmodul (40) über die Schwenkverbindung (45) gelenkig mit der Sitzfläche (20) verbunden ist.

3. Sitz (10) nach Anspruch 1 oder 2, **dadurch gekennzeichnet, dass** der Übergang des Armlehnenmoduls (40) von der Aufnahmeposition in die Ruheposition mit einer Drehung des vorderen Teils des Armlehnenmoduls (40) in Richtung der Rückseite der Sitzfläche (20) erfolgt, um den vorderen Teil näher an die Rückenlehne (30) heranzuführen.

4. Sitz (10) nach Anspruch 1 oder 2, **dadurch gekennzeichnet, dass** der Übergang des Armlehnenmoduls (40) von der Aufnahmeposition in die Ruheposition mit einer Drehung des hinteren Teils des Armlehnenmoduls (40) zur Vorderseite der Sitzfläche (20) hin erfolgt, um den hinteren Teil von der Rückenlehne (30) wegzubewegen.

5. Sitz (10) nach einem der vorhergehenden Ansprüche, **dadurch gekennzeichnet, dass** die Armlehne (42) L-förmig ist, so dass sie einen Schenkel (425) umfasst, der den oberen Teil des Armlehnenmoduls (40) in der Aufnahmeposition bildet.

6. Sitz (10) nach einem der vorhergehenden Ansprüche, **dadurch gekennzeichnet, dass** das Armlehnenmodul (40) einen Abschnitt aufweist, der einen Schutz bei einem Seitenaufprall bildet.

7. Sitz (10) nach einem der vorhergehenden Ansprüche, **dadurch gekennzeichnet, dass** das Armlehnenmodul (40) eine längliche Form entlang einer Längsachse X aufweist, wobei sich die Längsachse X in der Aufnahmeposition im Wesentlichen horizontal erstreckt und sich in der Ruheposition im Wesentlichen vertikal erstreckt.

## Claims

1. A vehicle seat (10) is composed of a backrest (30), a seat (20) extending in a transverse direction from a first side edge to a second side edge, and an armrest module (40), said module (40) comprising a body (41) and an armrest (42) supported by said body (41), and being able to move relative to said seat (20), said displacement being effected between a home position, where armrest (42) extends laterally from seat (20) or is lower than seat (20) so as to be able to receive an occupant, and a rest position wherein said armrest (42) is higher than said seat (20) so as to be able to receive an arm of an occupant sitting on said seat (20), said armrest module having a substantially flat shape in a vertical plane, with a thickness extending in said transverse direction, said displacement of the armrest module (40) relative to said seat (20) comprises a rotation with a pivot connection (45) about a pivot axis Z directed transversely to said seat (20), **characterized in that** said armrest (42) is slidable vertically relative to said body (41) to be adjustable in height between a low position and a high position when said armrest module (40) is in the rest position.

2. Seat (10), according to claim 1 **characterized in that** said armrest module (40), is articulated by said pivot connection (45) to said seat (20).

3. Seat (10), according to claim 1 or 2 **characterized in that** the passage of said armrest module (40) from the home position to the rest position, is effected with a rotation of the front portion of said armrest module (40) towards the rear of seat (20) to bring said front portion closer to said backrest (30).

4. Seat (10), according to claim 1 or 2 **characterized in that** the passage of said armrest module (40) from the home position to the rest position, is performed with a rotation of the rear of said armrest module (40) towards the front of seat (20) to move said rear portion away from said backrest (30).

5. Seat (10), according to any one of the preceding claims **characterized in that** said armrest (42), has an L-shape so that it comprises a branch (425), which constitutes the upper part of said armrest module (40) in the home position.

6. Seat (10), according to any one of the preceding claims **characterized in that** said armrest module (40), comprises a part which constitutes a protection in the event of lateral impact.

7. Seat (10), according to any one of the preceding claims **characterized in that** said armrest module (40), has an elongated shape along a longitudinal axis X, wherein the said longitudinal axis X substantially extends horizontally in the said home position, and substantially extends vertically in the said rest position.
